# EUROPÄISCHE PATENTSCHRIFT

(11) **EP 3 161 893 B1**
(45) Veröffentlichungstag und Bekanntmachung des Hinweises auf die Patenterteilung: **28.08.2019**
(21) Anmeldenummer: 15744883.8
(22) Anmeldetag: 19.06.2015
(51) Int. Cl.: H01M 10/0567, H01M 10/42, H01M 10/0525

(54) **KONTROLLIERTE ENTLADUNG EINES ENERGIESPEICHERS MITTELS REDOX-SHUTTLE-ADDITIVEN**
CONTROLLED DISCHARGE OF AN ENERGY STORE USING REDOX SHUTTLE ADDITIVES
DÉCHARGE CONTRÔLÉE D'UN ACCUMULATEUR D'ÉNERGIE AU MOYEN D'ADDITIFS NAVETTE-REDOX

(30) Priorität: 27.06.2014 DE 102014109045
(43) Veröffentlichungstag der Anmeldung: 03.05.2017
(73) Patentinhaber: Zentrum für Sonnenenergie- und Wasserstoff-Forschung Baden-Württemberg Gemeinnützige Stiftung, 70563 Stuttgart (DE)
(72) Erfinder: DOERING, Harry, 89275 Elchingen (DE); WACHTLER, Mario, 89077 Ulm (DE); WOHLFAHRT-MEHRENS, Margret, 89257 Illertissen-Tiefenbach (DE); EMMERMACHER, Brita, 89077 Ulm (DE)
(74) Vertreter: Ter Meer Steinmeister & Partner
(86) Internationale Anmeldenummer: PCT/EP2015/063793
(87) Internationale Veröffentlichungsnummer: WO 2015/197481

(56) Entgegenhaltungen:
- WO-A1-2011/144300
- WO-A1-2014/079542
- CN-A- 102 931 432
- JP-A- 2013 157 149
- US-A1- 2012 244 446
- US-A1- 2014 120 402
- QIZHAO HUANG ET AL: "Reversible chemical delithiation/lithiation of LiFePO4: towards a redox flow lithium-ion battery", PHYSICAL CHEMISTRY CHEMICAL PHYSICS, Bd. 15, Nr. 6, 1. Januar 2013 (2013-01-01) , Seite 1793, XP055164315, ISSN: 1463-9076, DOI: 10.1039/c2cp44466f
- JUN CHEN ET AL: "Chemical Overcharge and Overdischarge Protection for Lithium-Ion Batteries", ELECTROCHEMICAL AND SOLID-STATE LETTERS, IEEE SERVICE CENTER, PISCATAWAY, NJ, US, Bd. 8, Nr. 1, 1. Januar 2005 (2005-01-01), Seiten A59-A62, XP009124045, ISSN: 1099-0062, DOI: 10.1149/1.1836119 [gefunden am 2004-11-29] in der Anmeldung erwähnt
- BUHRMESTER C ET AL: "Phenothiazine Molecules - POSSIBLE REDOX SHUTTLE ADDITIVES FOR CHEMICAL OVERCHARGE AND OVERDISCHARGE PROTECTION FOR LITHIUM-ION BATTERIES", JOURNAL OF THE ELECTROCHEMICAL SOCIETY, PHILADELPHIA, US, US, Bd. 153, Nr. 2, 23. Dezember 2005 (2005-12-23), Seiten A288-A294, XP002396171, in der Anmeldung erwähnt

## Beschreibung

Die Erfindung betrifft eine Anordnung und ein Verfahren zur kontrollierten Entladung eines Energiespeichers mittels Redox-Shuttle-Additiven sowie die Verwendung von Redox-Shuttle-Additiven zur kontrollierten Entladung eines Energiespeichers.

### Hintergrund und Stand der Technik

### Gefährdung durch verunfallte Energiespeichersysteme

In Hybrid-, Plug-in Hybrid- und Elektrofahrzeugen werden üblicherweise elektrochemische Energiespeichersysteme als Komponenten zur Energiespeicherung eingesetzt. Den genannten Fahrzeugtypen ist gemein, dass große Mengen elektrischer Energie bereitgestellt und transferiert werden müssen. Die zunehmende Elektrifizierung von Fahrzeugen und der wachsende Anteil an Elektrohybrid-Fahrzeugen und reinen Elektrofahrzeugen bringt es mit sich, dass in zunehmendem Maße Energiespeichersysteme hoher Spannung und hoher Energieinhalte Anwendung finden. Aufgrund der hohen Energieinhalte und hohen Batteriespannungen stellen diese Energiespeichersysteme im geladenen Zustand ein potentielles Sicherheitsrisiko dar. Insbesondere bei verunfallten Fahrzeugen stellt sich die Frage, wie man das Energiespeichersystem ohne Risiko für Mensch und Umwelt bergen kann.

In unsicheren Situationen, z.B. nach der Auslösung von Schutzmechanismen (zellinterne oder externe Beschaltung, Abschalten der Hauptschütze, Auslösung der Sicherung, etc.) oder der Unterbrechung des Strompfades (z.B. nach Unfällen) kann der Fall eintreten, dass ein Energiespeichersystem, wie beispielsweise die Batterie, auf elektrischem Wege nicht mehr sicher entladen werden kann. Eine Bergung der geladenen oder teilgeladenen Batterie ist aufgrund der hohen Spannungslage bzw. der hohen Energieinhalte mit hohen Gefahren verbunden. Der Zugang zu den einzelnen Zellen ist oft nicht möglich, erschwert, sehr aufwändig oder mit zusätzlichen Gefahren verbunden, so dass auch eine sukzessive Demontage der Batterie und Bergung der Einzelkomponenten nicht ohne Weiteres möglich ist.

Ähnliche Probleme im Schadens- oder Versagensfall können sich auch für große Energiespeichersysteme in anderen Anwendungsbereichen, z.B. in der stationären Energiespeicherung, ergeben.

In Hybrid-, Plug-in Hybrid- und Elektrofahrzeugen werden üblicherweise elektrochemische Energiespeichersysteme als Komponenten zur Energiespeicherung eingesetzt. Diese elektrochemischen Energiespeichersysteme basieren zumeist auf der Nickel-Metallhydrid (NiMH)- oder Lithium-Ionen (Li-Ionen)-Technologie, wobei auch weitere Technologien als Energielieferanten und Speicher Anwendung finden, wie beispielsweise Doppelschichtkondensatoren, Blei-Säure- oder Nickel-Zink-Batterien oder auch luftatmende Batterien, die ein Zusammenwirken von Zink/Luft oder Lithium/Luft nutzen.

Die Sicherheit des Energiespeichers ist hierbei einer der Schwerpunkte bei der Entwicklung von Energiespeichersystemen, wie beispielsweise Li-Ionen-Batterien. Dabei unterscheidet man zwischen der Sicherheit auf Zell- und Systemebene. Die Brandsicherheit auf Zellebene wird wesentlich durch die Wahl der Elektrolyte beeinflusst.

Nach dem Stand der Technik werden in Li-Ionen-Batterien Elektrolyte eingesetzt, die aus mindestens einem Lithium-Salz, gelöst in einer Mischung aus organischen Lösungsmitteln, meist linearen und zyklischen organischen Carbonaten oder auch Estern, bestehen. Alle derzeit eingesetzten Lösungsmittel sind entzündlich und brennbar und stellen deshalb eine hohe Brandlast dar.

Die Sicherheit auf Systemebene wird üblicherweise durch Energiesteuerschaltungen inklusive Einzelzellüberwachung im bestimmungsgemäßen Betrieb sichergestellt. Eine solche EnergieSteuerschaltung ermittelt den Ladezustand des Energiespeichers und steuert unter anderem Hauptschütze zum Zu- bzw. Abschalten des Energiespeichers. Des Weiteren regelt die Energiesteuerschaltung den Energiefluss, d.h. welche Energiemenge dem Speicher entnommen oder zugeführt werden soll.

Durch unsachgemäßen Gebrauch des Energiespeichers oder durch einen Unfall, wenn der Energiespeicher in einem Fahrzeug angeordnet ist, können der Energiespeicher und/oder die Energiesteuerschaltung beschädigt werden. Dadurch kann zum Beispiel ein Schalten der Hauptschütze nicht mehr möglich sein und als Folge davon gehen die Schütze in ihre Ruheposition, d.h. die Hauptschütze werden geöffnet. Jedoch liegt in den meisten Fällen weiterhin die vollständige Spannung an den Zellen des Energiespeichers an.

Nachteilig wirkt sich dabei in diesem Fall aus, dass der Energiespeicher dann von außen nicht mehr gezielt entladen werden kann. Durch die an dem Energiespeicher anliegende Spannung kann nun beispielsweise ein Potential auf ein beschädigtes Gehäuse gelangen, das eine Bergung der verunfallten Batterie behindert und Bergungspersonal gefährdet. Des Weiteren besteht die Möglichkeit, dass elektrische Kurzschlüsse den brennbaren Elektrolyten des Energiespeichers oder bei einem verunfallten Fahrzeug eventuell ausgelaufenen Kraftstoff entzünden.

Die WO 2011/144300 A1 stellt zur Lösung der genannten Problematiken eine Energiespeicheranordnung mit einem Energiespeicher mit elektrischen Polen, über die der Energiespeicher zumindest entladbar ist, und einem elektrisch leitenden Leitmittel in Form eines Fluids oder feinkörnigen Schüttguts oder eines Gemisches aus beidem bereit, wobei das Leitmittel aus einem Vorratsbehälter in einen Auffangbehälter derart abgegeben wird, dass die elektrischen Pole des Energiespeichers über das Leitmittel in dem Auffangbehälter unmittelbar oder mittelbar elektrisch leitend miteinander verbunden werden.

### Redox-Shuttle-Additive

Redox-Shuttle-Additive sind in der Literatur bisher für den Einsatz als reversibler Schutz vor Überladung eines Energiespeichers beschrieben. Überladung kann auftreten, wenn nach Erreichen der Ladeendspannung weiter ein Ladestrom angelegt wird, und so die zulässige Ladespannung überschritten wird. Überladung kann zur chemischen und elektrochemischen Reaktion und damit zur Zersetzung der Batteriekomponenten führen. Die hieraus resultierende Temperaturerhöhung führt wiederum zu einer Beschleunigung der Reaktionen, was bis hin zu einer Explosion der Batterie führen kann.

Zur Verhinderung einer Überladung wurde der Zusatz chemischer Komponenten vorgeschlagen, welche üblicherweise als "Redox-Shuttle-Additive" bezeichnet werden. Derartige Verbindungen werden bei Überschreiten eines bestimmten Ladepotentials oxidiert. Die oxidierte Form ist stabil und kann durch Migration oder Diffusion zur Anode wandern und dort zur Ausgangsform entladen (reduziert) werden. Die reduzierte Spezies kann dann an der Kathode wiederum oxidiert werden usw.

Voraussetzung für die Verwendung einer Substanz als Überladeschutz ist daher, dass es reversibel oxidier- und reduzierbar ist und sowohl im reduzierten als auch oxidierten Zustand ausreichend stabil ist, sowie dass es ein geeignetes Redox-Potential besitzt, das höher liegt als das Ladeschlusspotential der Kathode. Weitere Voraussetzung ist eine ausreichende Löslichkeit und Beweglichkeit im Elektrolyten, um den anliegenden Strom im Überladefall vollständig zwischen Kathode und Anode zu transportieren.

Trotz intensiver Forschungen sind bisher nur wenige Substanzen bekannt, die alle diese Anforderungen erfüllen. Beispiele sind 2,5-Di-*tert*-butyl-1,4-dimethoxybenzol [J. Chen, C. Buhrmester, J.R. Dahn; Electrochemical and Solid-State Letters 8 (2005), A59-A62] und 10-Methylphenothiazin [C. Buhrmester, L. Moshurchak, R.L.C. Wang, J.R. Dahn; Journal of The Electrochemical Society 153 (2006), A288-A294]. Oft sind die gefundenen Redoxpotentiale zu niedrig für Anwendungen in Kombination mit den heute verwendeten Kathodenmaterialien. So werden die Kathodenmaterialien LiFePO₄ üblicherweise bis zu Potentialen von ca. 4,0 V vs. Li/Li⁺ und LiCoO₂ und Li(Ni_{0,33}Mn_{0,33}Co_{0,33})O₂ bis zu Potentialen von ca. 4,2 bis 4,3 V vs. Li/Li⁺ geladen. Dementsprechend müssen Redox-Shuttle-Additive für den Überladeschutz bei diesen oder höheren Potentialen aktiv werden.

QIZHAO HUANG ET AL, "Reversible chemical delithiation/lithiation of LiFePO4: towards a redox flow lithium-ion battery", PHYSICAL CHEMISTRY CHEMICAL PHYSICS, (20130101), Vol. 15, Nr. 6, Seiten 1793-1797, betrifft die Energiespeicherung unter Verwendung von chemisch reversibler Delithiierung/Lithiierung von Batteriematerialien.

Additive zur Verwendung in chemischen Energiespeichervorrichtungen werden ferner in der US 2014/120402 A1 und JP 2013 157149 A beschrieben.

### Technische Aufgabe und Zusammenfassung der Erfindung

In der vorliegenden Erfindung konnte überraschend festgestellt werden, dass sich neben den oben genannten Redox-Shuttle-Additiven auch viele Substanzen, die ein zu geringes Redox-Potential besitzen, um als Überladeschutz eingesetzt zu werden, hervorragend dazu eignen, Energiespeichersysteme kontrolliert zu entladen.

Aufgabe der vorliegenden Erfindung ist es daher, einen Energiespeicher kontrolliert zu entladen, insbesondere für den Fall, dass der Energiespeicher und/oder eine zugehörige, damit verbundene Energiesteuerschaltung durch Defekt oder Unfall beschädigt worden ist.

Die Aufgabe wird gelöst durch die Bereitstellung einer Energiespeicheranordnung gemäß Anspruch 1 sowie durch ein Verfahren gemäß Anspruch 12 und eine Verwendung gemäß Anspruch 14. Ausgestaltungen und Weiterbildungen des Erfindungsgedankens sind Gegenstand von Unteransprüchen.

Die Aufgabe wird insbesondere gelöst durch eine Energiespeicheranordnung, enthaltend
(1) einen Energiespeicher mit mindestens einer Anode, mindestens einer Kathode, Elektrolyt und elektrischen Polen, über die der Energiespeicher zumindest entladbar ist,
(2) einen Vorratsbehälter, enthaltend ein Redox-Shuttle-Additiv, und
(3) eine auslösbare Abgabevorrichtung, mittels der bei Auslösung das Redox-Shuttle-Additiv in den Elektrolyten des Energiespeichers derart abgegeben wird, dass die Kathode und die Anode des Energiespeichers mit dem im Elektrolyten vorhandenen Redox-Shuttle-Additiv in Kontakt stehen und der Energiespeicher teilweise oder vollständig entladen wird, indem das Redox-Shuttle-Additiv an der Kathode oxidiert und an der Anode reduziert wird,
wobei das Redox-Shuttle-Additiv zumindest partiell reversibel oxidierbar und partiell reversibel reduzierbar ist und ein Redoxpotential aufweist, welches kleiner oder gleich dem Potential der teilweise oder vollständig entladenen Kathode und größer oder gleich dem Potential der teilweise oder vollständig entladenen Anode ist.

Die Aufgabe wird weiterhin gelöst durch ein Verfahren zur kontrollierten Entladung einer Energiespeicheranordnung wie in einem der Ansprüche 1 bis 11 definiert, das Verfahren umfassend
i) Auslösen der Abgabevorrichtung und
ii) Abgabe des Redox-Shuttle-Additivs aus dem Vorratsbehälter in den Elektrolyten des Energiespeichers,
wobei die Elektroden des Energiespeichers mit dem im Elektrolyten vorhandenen Redox-Shuttle-Additiv in Kontakt kommen und der Energiespeicher teilweise oder vollständig entladen wird, indem das Redox-Shuttle-Additiv an der Kathode oxidiert und der Anode reduziert wird.

Die Aufgabe wird ferner gelöst durch die Verwendung eines Redox-Shuttle-Additivs zur kontrollierten Entladung einer wenigstens teilweise geladenen Energiespeicheranordnung, wie zuvor beschrieben.

### Beschreibung der Zeichnungen

Figur 1: Verlauf der Zellspannung während der Entladung der Zelle nach Zugabe unterschiedlicher Substanzen.
Figur 2: Temperaturverlauf während der Entladung der Zellen nach Zugabe unterschiedlicher Substanzen

### Detaillierte Beschreibung der Erfindung

### Energiespeicheranordnung

Typischerweise ist der Energiespeicher eine Batterie, bevorzugt eine wiederaufladbare Batterie, beispielsweise ein wiederaufladbarer Lithium-Ionen-Akkumulator. Ferner kann der Energiespeicher Teil einer stationären, tragbaren oder mobilen Anwendung sein. Typischerweise handelt es sich um eine Batterie für ein KfZ-Fahrzeug, wie beispielsweise eine Autobatterie, eine Batterie für ein Hybridfahrzeug, Plug-in Hybrid oder ein Elektrofahrzeug.

Die Energiespeicheranordnung ist ferner wenigstens partiell geladen, kann aber auch vollständig geladen sein.

In einer ersten Ausführungsform umfasst die Erfindung eine Energiespeicheranordnung, enthaltend
(1) einen Energiespeicher mit mindestens einer positiven und mindestens einer negativen Elektrode, Elektrolyt und elektrischen Polen, über die der Energiespeicher zumindest entladbar ist,
(2) einen Vorratsbehälter, enthaltend ein Redox-Shuttle-Additiv, und
(3) eine auslösbare Abgabevorrichtung, mittels der bei Auslösung das Redox-Shuttle-Additiv in den Elektrolyten des Energiespeichers derart abgegeben wird, dass die Elektroden des Energiespeichers mit dem im Elektrolyten vorhandenen Redox-Shuttle-Additiv in Kontakt stehen und der Energiespeicher teilweise oder vollständig entladen wird, indem das Redox-Shuttle-Additiv an der positiven Elektrode ("Kathode") oxidiert und der negativen Elektrode ("Anode") reduziert wird,
wobei das Redox-Shuttle-Additiv zumindest partiell reversibel oxidierbar und partiell reversibel reduzierbar ist und ein Redoxpotential aufweist, welches kleiner oder gleich dem Potential der teilweise oder vollständig entladenen Kathode und größer oder gleich dem Potential der teilweise oder vollständig entladenen Anode ist.

Eine typische Ausgestaltung einer Energiespeicheranordnung zur kontrollierten Entladung eines Energiespeichers mit mindestens einer positiven und mindestens einer negativen Elektrode, Elektrolyt und elektrischen Polen, über die der Energiespeicher zumindest entladbar ist, einem Vorratsbehälter, sowie einer auslösbaren Abgabevorrichtung ist in der WO 2011/144300 beschrieben, auf welche durch Inbezugnahme verwiesen wird.

Insbesondere können der Energiespeicher und/oder eine den Energiespeicher steuernde Energiesteuerschaltung durch unsachgemässen Gebrauch des Energiespeichers oder durch einen Unfall, wenn der Energiespeicher beispielsweise in einem Fahrzeug angeordnet ist, beschädigt werden. Dadurch kann zum Beispiel ein Schalten einer Schütze in der Energiesteuerschaltung nicht mehr möglich sein und als Folge davon gehen diese in ihre Ruheposition, d.h. die Hauptschütze werden geöffnet. Weiterhin liegt jedoch die vollständige Spannung an den Polen des Energiespeichers an. Durch die an dem Energiespeicher anliegende Spannung kann nun beispielsweise ein Potential an Fahrzeugteile gelangen, das eine Bergung behindert und Bergungspersonal gefährdet. Des Weiteren besteht die Möglichkeit, dass elektrische Kurzschlüsse den brennbaren Elektrolyten des Energiespeichers oder bei einem verunfallten (Hybrid-) Fahrzeug eventuell ausgelaufenen Kraftstoff entzünden.

Der erfindungsgemäße Lösungsansatz sieht nun vor, beispielsweise analog zur Auslösung eines Airbags, über die auslösbare Abgabevorrichtung ein Redox-Shuttle-Additiv in den Polraum der Zellen und/oder einen Raum um die Schütze einer Energiesteuerschaltung abzugeben. Dabei erfolgt die Abgabe des Redox-Shuttle Additivs aus dem Vorratsbehälter in den Elektrolyten des Energiespeichers.

Da das Redox-Shuttle-Additiv zumindest partiell reversibel oxidierbar und zumindest partiell reversibel reduzierbar ist, kann das Redox-Shuttle-Additiv durch Migration oder Diffusion zur Anode/Kathode wandern und dort in die reduzierte/oxidierte Form überführt werden. Die reduzierte/oxidierte Spezies kann dann an der Kathode/Anode wiederum oxidiert/reduziert und so in die oxidierte/reduzierte Form überführt werden, usw. Hierbei erfolgt durch die Anwesenheit des Redox-Shuttle-Additivs in dem Elektrolyten ein elektrisches Verbinden der Energiespeicherpole, wodurch der Energiespeicher kontrolliert entladen wird. Dabei sinkt das Gefährdungspotential kontinuierlich bzw. es besteht nach der vollständigen Entladung keine elektrische Gefährdung mehr durch den Energiespeicher.

Durch die Entladung des Energiespeichers wird auch dessen inneres chemisches Potential entsprechend reduziert, so dass auch bei direkter Berührung der Elektroden im Inneren des Energiespeichers (Separatorbruch, Penetration der Zellen beim Bergen usw.) ebenfalls keine Gefahr mehr von dem Energiespeicher ausgeht. Der Energiespeicher kann nach dessen vollständiger Entladung gefahrlos gehandhabt werden.

Die Abgabe des Redox-Shuttle-Additivs erfolgt derart, dass die elektrischen Pole des Energiespeichers über das Redox-Shuttle-Additiv wie oben beschrieben elektrisch leitend miteinander verbunden werden. Das Auslösen der Abgabevorrichtung kann dabei manuell erfolgen oder direkt oder indirekt als Reaktion auf ein Ereignis. Die Abgabevorrichtung kann zu diesem Zweck beispielsweise als ein manuell betätigbares oder ein zum Beispiel elektrisch gesteuertes Ventil ausgeführt sein.

Für einen Fall, in dem der Energiespeicher zum Beispiel Teil eines Hybrid-, Plug-in Hybrid- oder Elektrofahrzeugs ist, kann ein solches Ereignis eine Beschädigung einer Energiesteuerschaltung der Energiespeicheranordnung und/oder des Energiespeichers sein, beispielsweise als Folge eines Fahrzeugunfalls. Eine solche Beschädigung kann zum Beispiel durch entsprechende Sensoren festgestellt werden und damit mittelbar eine Auslösung der Abgabevorrichtung veranlassen. In einer anderen Ausführungsform kann die Abgabevorrichtung selbst über eine Vorrichtung, wie zum Beispiel einen eigenen Crash-Sensor gegebenenfalls in Verbindung mit Mikrosprengladungen wie etwa bei Airbags verfügen, die die Abgabe des Redox-Shuttle-Additivs von dem Vorratsbehälter unmittelbar auslöst. Alternativ dazu kann auch eine Sollbruchstelle an der Verbindung zwischen dem Vorratsbehälter und dem die Elektroden verbindenden Elektrolytraum vorgesehen sein, in welchem die Abgabe des Redox-Shuttle-Additivs erfolgt. Bevorzugt ist die auslösbare Abgabevorrichtung ausgewählt aus einer Sollbruchstelle, Mikrosprengladung, einem mechanisch, thermisch, chemisch und/oder elektrisch gesteuerten Freisetzungsmechanismus, vorzugsweise einem Ventil und/oder Sensor oder eine Kombination verschiedener Auslösemechanismen.

In einer alternativen und nicht erfindungsgemäßen Ausführungsform der Energiespeicheranordnung ist das Redox-Shuttle-Additiv in einer nicht reaktiven Form in dem Energiespeicher enthalten, beispielsweise im Elektrolyten des Energiespeichers. Die Aktivierung des Redox-Shuttle-Additivs erfolgt hierbei durch Inkontaktbringen mit einer Aktivatorkomponente, welche üblicherweise im Vorratsbehälter enthalten ist. Hierbei wird die Aktivatorkomponente mittels der auslösbaren Abgabevorrichtung bei Auslösung in den Elektrolyten des Energiespeichers derart abgegeben, dass die Elektroden des Energiespeichers mit dem bspw. im Elektrolyten vorhandenen aktivierten Redox-Shuttle-Additiv in Kontakt stehen und der Energiespeicher teilweise oder vollständig entladen wird, indem das aktivierte Redox-Shuttle-Additiv an der Kathode oxidiert und der Anode reduziert wird.

In einer weiteren nicht erfindungsgemäßen Ausführungsform kann das Redox-Shuttle-Additiv auch durch Zugabe von außerhalb in die Energiespeicheranordnung zugegeben werden, beispielsweise manuelle, mechanische oder elektrische Zudosierung oder durch Einfüllen.

In einer alternativen Ausführungsform kann die Energiespeicheranordnung zur besseren Kühlung über aktive oder passive Kühlvorrichtungen verfügen. Hierdurch kann in vorteilhafter Weise bei der kontrollierten Entladung entstehende Wärme, beispielsweise für den Fall, dass eine sehr rasche Entladung innerhalb weniger Minuten erfolgen soll, abgeführt und eine durch die Temperaturerhöhung potentielle Sicherheitsgefährdung vermieden werden.

In einer alternativen Ausführungsform, insbesondere bei Verwendung von wasserhaltigen Elektrolyten, kann die Energiespeicheranordnung ferner über ein Sicherheitsventil verfügen. Hierdurch können in vorteilhafter Weise bei der kontrollierten Entladung möglicherweise entstehende Gase, wie beispielsweise Wasserstoff oder Wasserdampf, nach außen abgeführt werden. Das Entstehen eines Überdrucks in dem Energiespeicher und die Gefahr einer Explosion kann hierdurch vermieden werden.

Ein weiterer Gegenstand der Erfindung ist ein Verfahren zur kontrollierten Entladung einer wie zuvor beschriebenen Energiespeicheranordnung, das Verfahren umfassend
i) Auslösen der Abgabevorrichtung und
ii) Abgabe des Redox-Shuttle-Additivs aus dem Vorratsbehälter in den Elektrolyten des Energiespeichers,
wobei die Elektroden des Energiespeichers mit dem im Elektrolyten vorhandenen Redox-Shuttle-Additiv in Kontakt kommen und der Energiespeicher teilweise oder vollständig entladen wird, indem das Redox-Shuttle-Additiv an der Kathode oxidiert und der Anode reduziert wird, und
wobei das Redox-Shuttle-Additiv zumindest partiell reversibel oxidierbar und partiell reversibel reduzierbar ist und ein Redoxpotential aufweist, welches kleiner oder gleich dem Potential der teilweise oder vollständig entladenen Kathode und größer oder gleich dem Potential der teilweise oder vollständig entladenen Anode ist.

Bezüglich bevorzugter Ausführungsformen des erfindungsgemäßen Verfahrens wird auf die oben beschriebenen Ausführungen zur Energiespeicheranordnungen verwiesen, welche gleichfalls für das erfindungsgemäße Verfahren Anwendung finden.

### Redox-Shuttle-Additiv

In der vorliegenden Erfindung konnte überraschend gefunden werden, dass bei Verwendung eines Redox-Shuttle-Additivs in einer wie hierin beschriebenen partiell geladenen oder vollständig geladenen Energiespeicheranordnung diese ohne Verwendung eines externen Stromkreises kontrolliert entladen werden kann.

Bei den im Folgenden beschrieben Redox-Shuttle-Additiven ("Redox-Shuttle") handelt es sich um zumindest partiell reversibel oxidierbare/reduzierbare Substanzen. Vorzugsweise ist das Redox-Shuttle-Additiv reversibel oxidierbar /reduzierbar. Der Begriff "Redox-Shuttle-Additiv" wie hierin verwendet umfasst auch Kombinationen und Mischungen von verschiedenen Substanzen, beispielsweise zwei, drei oder mehre verschiedene Redox-Shuttle-Additive.

Für die Entladung können Redox-Shuttle-Additive des p-Typs, die im Ausgangszustand in der reduzierten Form vorliegen, als auch Additive des n-Typs, welche im Ausgangszustand in der oxidierten Form vorliegen, eingesetzt werden. Das Reaktionsschema ("Redox-Kreislauf") lautet für Redox-Shuttle-Additive des p-Typs:
(1) Oxidation der reduzierten Form an der Kathode zur oxidierten Form, da das Potential der Kathode höher liegt als das Redoxpotential des Additivs,
(2) Diffusion/Migration der oxidierten Form von der Kathode zur Anode,
(3) Reduktion der oxidierten Form an der Anode zur reduzierten Form, da das Potential der Anode tiefer liegt als das Redoxpotential des Additivs,
(4) Diffusion/Migration der reduzierten Form von der Anode zur Kathode,
(5) weiter mit Schritt (1) usw.

Der Reaktionsmechanismus für Additive des n-Typs, die zu Beginn in der oxidierten Form vorliegen, beginnt entsprechend mit Schritt (3).

Da im Falle eines verunfallten bzw. beschädigten Energiespeichers kein Strom über den äußeren Stromkreis fließt, erfolgt die Entladung der Elektroden des Energiespeichers durch den Kreislauf aus Oxidation und Reduktion des Redox-Shuttle-Additivs. Die Elektroden werden somit in Folge entladen. Der Entladeprozess schreitet solange fort, bis das Kathodenpotential auf Werte unter dem Redoxpotential des Additivs abgesunken ist, oder bis das Anodenpotential auf Werte über dem Redoxpotential des Additivs angestiegen ist.

Während für Anwendungen von Redox-Shuttle-Additiven als reversibler Überladeschutz üblicherweise extrem hohe Reversibilitäten und Stabilitäten über lange Zeit und viele Zyklen, bzw. über hohen Ladungsdurchsatz gefordert sind, um die Zelle möglichst lange vor Überladung zu schützen, ist es für die kontrollierte Entladung gemäß der vorliegenden Erfindung üblicherweise ausreichend, dass sich das Additiv wenigstens so oft oxidieren und reduzieren lässt und solange stabil ist, bis die Zelle vollständig entladen ist bzw. eine Entladung bis unterhalb eines Gefährdungspotentials stattgefunden hat. Entsprechend können in der vorliegenden Erfindung im Vergleich zur Anwendung als Überladungsschutz auch Redox-Shuttle-Additive verwendet werden, welche nicht zu 100% reversibel und/oder nicht zu 100% stabil sind.

Art, Menge und Konzentration des Redox-Shuttle-Additivs werden üblicherweise derart gewählt, dass die Entladung des Energiespeichers über einen Zeitraum erfolgt, der eine rasche und sichere Handhabung des kontrolliert entladenen Energiespeichers, beispielsweise dessen Entfernung aus einem verunfallten Kraftfahrzeug, ermöglicht. Mit steigender Konzentration bzw. zugegebener Menge verkürzt sich hierbei die Dauer der Entladung, vorausgesetzt, die Menge an zugegebenem Redox-Shuttle ist noch im Elektrolyten löslich.

Bevorzugt erfolgt eine kontrollierte Entladung über einen Zeitraum von 2 Minuten bis 72 Stunden, bevorzugt von 30 min bis 24 Stunden, besonders bevorzugt von 1 bis 10 Stunden, wobei je nach Anwendung des Energiespeichers jedoch auch schnellere oder langsamere Entladezeiten erforderlich sein können.

Die Entladedauer ist insbesondere abhängig von der Diffusions- bzw. Migrationsgeschwindigkeit (Mobilität) des Redox-Shuttle-Additivs in dem jeweiligen Elektrolyten und kann somit je nach Erfordernis in idealer Weise durch Wahl der Kombination aus Redox-Shuttle-Additiv und Elektrolyt beeinflusst werden. Insbesondere kann der Entladeprozess durch Wahl der genannten Parameter so angepasst werden, dass die Entladung so schnell wie erforderlich erfolgt, jedoch langsam genug, um sicherzustellen, dass die bei der Entladung entstehende Wärme über Strahlung, Konvektion oder Kontakt zu wärmeleitenden Komponenten weitgehend abgeführt werden kann und sich die Zelle nicht bis zu Temperaturen erwärmt, bei welchen thermische Sicherheitsprobleme der Zelle auftreten. Bei geringen Additiv-Konzentrationen, die in einer mehrstündigen Entladerate resultieren stellt die Erwärmung der Zelle üblicherweise kein Problem dar. Ist eine rasche Entladung erforderliche, beispielsweise eine Entladung innerhalb von 10 Minuten, innerhalb von 5 Minuten oder schneller, kann die Erwärmung der Energiespeicheranordnung, beispielsweise durch Kombination mit einem aktiven oder passiven Kühlsystem, wie oben beschrieben, vermieden werden.

Das Redox-Shuttle-Additiv kann in dem Vorratsbehälter sowohl in fester oder in flüssiger, vorzugsweise in gelöster Form, vorliegen. Alternativ kann das Redox-Shuttle-Additiv auch in Form einer Dispersion in dem Vorratsbehälter vorliegen. Bei Vorlage des Redox-Shuttle-Additivs in fester Form, beispielsweise in Abwesenheit eines Lösungsmittels oder als Dispersion, ist es bevorzugt, dass dieses in dem Elektrolyten des Energiespeichers zumindest partiell löslich ist. Bei Vorlage des Redox-Shuttle-Additivs in gelöster Form sind nicht-wässrige Lösungen bevorzugt. Vorlage von Redox-Shuttle-Additiven in Form wässriger Lösungen, wie beispielsweise in Form wässriger Salzlösungen, Säuren und Laugen, führt zwar ebenfalls durch den zuvor beschriebenen Mechanismus zur kontrollierten Entladung des Energiespeichers, nachteilig ist herbei jedoch, dass bei wässrigen Medien in der Regel als Nebenreaktion eine Gasbildung stattfinden kann, wodurch sich insbesondere an der Anode brennbare Gase bilden können. Um eine Gefährdung durch auftretende Gase, welche zu einer Druckerhöhung im Inneren des Energiespeichers und somit zu einer Explosionsgefahr führen können, zu vermeiden, kann es erforderlich sein, den Energiespeicher mit einem Sicherheitsventil, beispielsweise einem Überdruckventil, auszustatten, und so die Sicherheit zusätzlich zu erhöhen. Die Zugabe des Redox-Shuttle-Additivs in Form wässriger Lösungen kann trotz der möglichen Bildung von Gasen beispielsweise aus Kostengründen oder aus Umweltverträglichkeitsgesichtspunkten gewünscht oder erforderlich sein.

Bevorzugt ist die Zugabe eines Redox-Shuttle-Additivs in Form nichtwässriger Lösungen, da hierbei der Entladestrom hauptsächlich über die Oxidation und Reduktion des Redoxpaares des Redox-Shuttle-Additivs fließt und somit keine Nebenreaktionen stattfinden. Die Bildung von potentiell gefährdenden gasförmigen Produkten kann somit vermieden beziehungsweise vollständig unterdrückt werden.

Die Menge des in dem Vorratsbehälter vorgelegten Redox-Shuttle-Additivs sowie bei Vorlage des Redox-Shuttle Additivs in gelöster Form die Konzentration des Redox-Shuttle-Additivs ist nicht besonders beschränkt. Typischerweise sind sowohl die Menge als auch die Konzentration des Redox-Shuttle-Additivs abhängig von den räumlichen Ausmaßen, der Menge und Art des Elektrolyten sowie der Ladespannung des Energiespeichers.

Bevorzugt beträgt die Menge des in dem Vorratsbehälter vorgelegten Redox-Shuttle-Additivs zwischen 0,1 bis 1000g, vorzugsweise 1 bis 100g, wobei je nach Art des Redox-Shuttle-Additivs und den Ausmaßen des Energiespeichers auch geringere oder höhere Mengen eingesetzt werden können.

Bevorzugt beträgt die Konzentration des Redox-Shuttle-Additivs nach Zugabe in den Elektrolyten des Energiespeichers in dem Elektrolyten von 0,005 mol/L bis 10 mol/L, bevorzugt von 0,05 bis 5 mol/L, besonders bevorzugt von 0,1 bis 2 mol/L, wobei die Konzentration jedoch je nach Art des Redox-Shuttle-Additivs und des Elektrolyten des Energiespeichers auch niedriger oder höher sein kann.

Die Art des Redox-Shuttle-Additivs ist nicht besonders beschränkt, solange die Substanz zumindest partiell reversibel oxidierbar und zumindest partiell reversibel reduzierbar ist.

In einer bevorzugten Ausführungsform ist das Redox-Shuttle Additiv eine organische Verbindung, ausgewählt aus der Klasse der
- Aryl-Chinon-Verbindungen, wie Benzochinon-Verbindungen (z.B. 2,6-Di-*tert*-butyl-1,4-benzochinon) oder Anthrachinon-Verbindungen,
- Alkoxy-Aryl-Verbindungen, wie Monoalkoxybenzol-Verbindungen (z.B. Anisol) oder Dialkoxybenzol-Verbindungen (z.B. 2,5-Di-*tert*-butyl-1,4-dimethoxybenzol, 2,5-Di-*tert-*butoxy-1,4-dimethoxybenzol, 1,4-Di-*tert*-butyl-2,5-bis(2,2,2-trifluoroethoxy)benzol, oder 1,4-bis(2-methoxyethoxy)-2,5-di-*tert*-butylbenzol),
- Aryl-Pseudohalogenid-Verbindungen, wie Phenyl(iso)cyanate oder Phenyl(iso)thiocyanate (z.B. 5-Chlor-2,4-dimethoxyphenylisocyanat, 1,4-Diisocyanato-2,3,5,6-tetramethylbenzol),
- Ester-Verbindungen, wie Borsäureester (z.B. Dioxaborol-Verbindungen wie 2-(Pentafluorphenyl)tetrafluor-1,3,2-benzodioxaborol) oder Phosphorsäureester (wie Tetraethyl-2,5-di-*tert*-butyl-1,4-phenylendiphosphat),
- Nitroxyl-Verbindungen, wie 2,2,6,6-Tetramethylpiperidinyloxyl (TEMPO) und dessen Derivate (z.B. 4-Cyano-2,2,6,6-tetramethylpiperidinyloxyl, 4-Methoxy-2,2,6,6-tetramethylpiperidinyloxyl) oder 2,2,5,5-Tetramethyl-1-pyrrolidinyloxyl (PROXYL) und dessen Derivate (z.B. 3-cyano-2,2,5,5-tetramethyl-1-pyrrolidinyloxyl),
- Aryl-Amino-Verbindungen, wie Triphenylamin oder Tris(4-bromphenyl)amine,
- Stickstoff- und/oder Sauerstoff- und/oder Schwefel-haltigen aromatischen oder nichtaromatischen heterozyklischen Verbindungen, wie der Phenothiazine (z.B. 10-Methylphenothiazin, 3-Chlor-10-ethylphenothiazin).

In einer alternativen Ausführungsform ist das Redox-Shuttle Additiv ein Salz, bevorzugt ein Salz eines Alkali- oder Erdalkalimetalls, beispielsweise eine Lithium-basierte oder andere Salzverbindung, bevorzugt ausgewählt aus der Klasse der
- Pseudohalogenide, wie LiSCN oder LiOCN,
- Dodecaborate der Formel Li₂B₁₂X₁₂₋ₓHₓ (mit 0 ≤ x ≤ 12 und X = F, Cl, Br), wie Li₂B₁₂F₁₂ oder Li₂B₁₂F₉H₃,

In einer alternativen Ausführungsform enthält das Redox-Shuttle Additiv ein reversibel oxidier/reduzierbares Metallion oder eine Verbindung mit reversibel oxidier/reduzierbaren Metallzentren, bevorzugt ausgewählt aus Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺und V²⁺/V³⁺/V⁴⁺/V⁵⁺, besonders bevorzugt ausgewählt aus Ferrocen und dessen Derivaten, Cobaltocen und dessen Derivaten, Hexacyanoferrat-Verbindungen, und Permanganat-Verbindungen.

Die Auswahl des Redox-Shuttles richtet sich nach den verwendeten Elektrodenmaterialien, bzw. nach den Potentialbereichen innerhalb welcher diese geladen und entladen werden können. So arbeiten z.B. die Kathodenmaterialien LiFePO₄ zwischen ca. 3,3 und 3,6 V vs. Li/Li⁺, LiMnPO₄ zwischen ca. 3,8 und 4,2 V vs. Li/Li⁺, LiMnₓFe₁₋ₓPO₄ zwischen ca. 3,3 und 4,2 V vs. Li/Li⁺, LiCoO₂, LiNi_{0,80}Co_{0,15}Al_{0,05}O₂ und LiNi_{0,33}Mn_{0,33}Co_{0,33}O₂ zwischen ca. 3,5 und 4,3 V vs. Li/Li⁺, 0,67xLi₂MnO₃•(1-x)LiNi_{y}Mn_{z}Co_{1-y-z}O₂ (z.B. Li_{1.2}Ni_{0.15}Mn_{0.55}Co_{0.1}O₂) zwischen ca. 3,0 und 4,5 V vs. Li/Li⁺, LiMn₂O₄ (Lithium-Mangan-Spinell) zwischen ca. 3,8 und 4,4 V vs. Li/Li⁺ und LiNi_{0.5}Mn_{1.5}O₄ ("Hochvolt-Spinell") zwischen ca. 4,6 und ca. 4,9 V vs. Li/Li⁺ und die Anodenmaterialien Grafit zwischen ca. 0 und 0,3 V vs. Li/Li+, amorpher Kohlenstoff zwischen ca. 0 und 1,3 V vs. Li/Li+, Li₄Ti₅O₁₂ (Lithium-Titan-Spinell) zwischen ca. 1,3 und 1,7 V vs. Li/Li⁺, Silizium zwischen ca. 0 und 0,6 V vs. Li/Li⁺ und Lithium-Metall um ca. 0 V vs. Li/Li+. Folglich können z.B. Ferrocen (mit einem Redoxpotential von ca. 3,2 V vs. Li/Li⁺) für die (nahezu) vollständige Entladung aller genannten Kathodenmaterialien eingesetzt werden, TEMPO (mit einem Redoxpotential von ca. 3,5 V vs. Li/Li+) und 10-Methylphenothiazin (mit einem Redoxpotential von ca. 3,5 V vs. Li/Li+) für die (nahezu) vollständige Entladung aller genannten Kathodenmaterialien außer 0,67xLi₂MnO₃•(1-x)LiNi_{y}Mn_{z}Co_{1-y-z}O₂ und für die teilweise Entladung von 0,67xLi₂MnO₃•(1-x)LiNi_{y}Mn_{z}Co_{1-y-z}O₂, 2,5-Di-*tert*-butyl-1,4-dimethoxybenzol (mit einem Redoxpotential von ca. 3,9 V vs. Li/Li⁺) und 2,5-Di-*tert*-butoxy-1,4-dimethoxybenzol (mit einem Redoxpotential von ca. 3,9 V vs. Li/Li⁺) für die (nahezu) vollständige Entladung von LiMnPO₄, LiMn₂O₄ und LiNi_{0,5}Mn_{1,5}O₄ und teilweise Entladung von LiMnₓFe₁₋ₓPO₄, LiCoO₂, LiNi_{0,80}Co_{0,15}Al_{0,05}O₂, LiNi_{0,33}Mn_{0,33}Co_{0,33}O₂, 0,67xLi₂MnO₃•(1-x)LiNi_{y}Mn_{z}Co_{1-y-z}O₂ und Li₂B₁₂F₉H₃ (mit einem Redoxpotential von ca. 4,5 V vs. Li/Li⁺) für die (nahezu) vollständige Entladung von LiNi_{0,5}Mn_{1,5}O₄ und die teilweise Entladung von 0,67xLi₂MnO₃•(1-x)LiNi_{y}Mn_{z}Co_{1-y-z}O₂. Da die Redox-Potentiale der genannten Redox-Shuttle höher liegen als jene der angeführten Anodenmaterialien können in den oben angeführten Redox-Shuttle/Kathoden-Kombinationen alle genannten Anodenmaterialien verwendet werden.

In einer alternativen Ausführungsform liegt das Redox-Shuttle-Additiv in dem Vorratsbehälter in einem Lösungsmittel oder Elektrolyten vor, wobei der Elektrolyt auch das Lösungsmittel für das Redox-Shuttle-Additiv sein kann. Bevorzugt ist für das Lösungsmittel ein nicht-wässriges Lösungsmittel, wobei je nach Art des Redox-Shuttle-Additivs oder des Elektrolyten des Energiespeichers auch wasserhaltige Lösungsmittel geeignet oder erforderlich sein können. Bevorzugte nicht-wässrige Lösungsmittel sind ausgewählt ausorganischen Carbonaten (wie Ethylencarbonat, Propylencarbonat, Dimethylcarbonat, Ethylmethylcarbonat, Diethylcarbonat, Fluorethylencarbonat, etc.), Carbonsäureestern (wie Ethylacetat, Gammabutyrolacton, Gammavalerolacton, Deltavalerolacton, etc.), Sulfonen (wie Ethylmethylsulfon, Sulfolan, etc.), Sulfoxiden (wie Dimethylsulfoxid, etc.), Ethern (wie Dimethoxyethan, Diglyme, Triglyme, Tetraglyme, Tetrahydrofuran, 2-Methyltetrahydrofuran, etc.), Nitrilen (Acetonitril, Adiponitril, Glutaronitril, 2-Methylglutaronitril, etc.) und Amiden (wie Dimethylformamid, etc.) sowie Mischungen derselben.

Ferner bevorzugt ist der Elektrolyt ein wasserfreier Elektrolyt, besonders bevorzugt ausgewählt aus Lösungen von LiPF₆, Lithiumbis(trifluormethylsulfonyl)imid (LiTFSI), Lithiumbis(fluorsulfonyl)imid (LiFSI), Lithiumbis(oxalato)borat (LiBOB), Lithiumdifluoroxalatoborat (LiDFOB), Lithiumtris(pentafluorethyl)trifluorphosphat (LiFAP), etc. in den oben genannten Lösungsmitteln oder Lösungsmittelmischungen. Typische Beispiele für solche Elektrolyte sind 1 mol/L LiPF₆ in Ethylencarbonat:Dimethylcarbonat (1:1), 1 mol/L LiPF₆ in Ethylencarbonat:Ethylmethylcarbonat (3:7) und 1 mol/L LiPF₆ in Ethylencarbonat:Dimethylcarbonat:Ethylacetat (1:1:1).

### Effekt

Durch die Verwendung von Redox-Shuttle-Additiven in einer Energiespeicheranordnung sowie einem Verfahren wie zuvor beschrieben ist es möglich, teil- oder vollgeladene Batterien innerhalb eines Zeitraums von einigen Minuten bis wenigen Tagen vollständig zu entladen, ohne dass dafür eine Entladung über einen externen Stromkreis erforderlich wäre. Insbesondere konnte überraschend festgestellt werden, dass sich Substanzen, die ein zu geringes Redox-Potential besitzen, um als Überladeschutz eingesetzt zu werden, hervorragend dazu eignen, Energiespeichersysteme kontrolliert zu entladen.

Es ist somit möglich, einen Energiespeicher kontrolliert zu entladen, insbesondere für den Fall, dass der Energiespeicher und/oder eine zugehörige, damit verbundene Energiesteuerschaltung durch Defekt oder Unfall beschädigt worden ist. Der Energiespeicher kann hierdurch gefahrlos gehandhabt werden, beispielsweise ohne Gefährdung für Personen aus einem Unfallfahrzeug geborgen werden.

Die Erfindung wird durch die folgenden Beispiele weiter beschrieben, ohne die Erfindung jedoch hierdurch zu beschränken.

### Beispiele

### Vergleichsbeispiel 1

### Verhalten einer Batteriezelle ohne Zusatz eines Redox-Shuttle-Additivs

Eine prismatische Li-Ionen-Zelle mit einer nominellen Kapazität von 20 Ah mit Grafit-Anode und Schichtoxid-Kathode (LiNi_{0,33}Mn_{0,33}O₂) wurde galvanostatisch mit einem Strom von 20 A bis zu einer Ladeschlussspannung von 4,1 V geladen. Nach Abschalten des Ladestroms relaxierte die Zellspannung innerhalb von ca. 0,5 h auf eine Ruhespannung von 4,085 V.

Danach wurde die Zelle bei Raumtemperatur bei offenen Klemmen gelagert. Dabei sank die Zellspannung innerhalb von 3 Monaten um weniger als 0,034 V.

### Vergleichsbeispiel 2:

### Verhalten einer Batteriezelle bei Zugabe von demineralisiertem Wasser

Eine prismatische Li-Ionen-Zelle mit einer nominellen Kapazität von 20 Ah mit Grafit-Anode und Schichtoxid-Kathode (LiNi_{0,33}Mn_{0,33}Co_{0,33}O₂) wurde galvanostatisch mit einem Strom von 20 A bis zu einer Ladeschlussspannung von 4,1 V geladen. Nach Abschalten des Ladestroms relaxierte die Zellspannung innerhalb von ca. 0,5 h auf eine Ruhespannung von 4,085 V.

Danach wurde die Zelle angebohrt und mit einem Septum wieder verschlossen.

Über das Septum wurden innerhalb eines Zeitraums von 1 h 20 mL demineralisiertes Wasser eingespritzt. Nach Zugabe wurden die Spannung der Zelle und die Temperatur der Zelle kontinuierlich aufgezeichnet. Zusätzlich wurde über eine Gasmess-Apparatur, welche aus einem Glaskolben und -zylinder bestand und über einen Kapillarschlauch und eine das Septum durchstoßende Nadel mit dem Gasraum der Zelle verbunden war, die Menge sich entwickelnden Gases aufgezeichnet.

Die Zelle entlud sich innerhalb von 56 h ab Zugabe des demineralisierten Wassers vollständig (bis < 2 V Zellspannung). Die Zellspannung lag nach 73 h bei 0,92 V. Die Temperatur der Zelle stieg während der Entladung um nicht mehr als 3°C an (was innerhalb der natürlichen Temperaturschwankungen im Testraum liegt). Während der Entladung gaste die Zelle deutlich und es bildeten sich 525 mL Gas.

### Vergleichsbeispiel 3:

### Verhalten einer Batteriezelle bei Zugabe von Leitungswasser

Das Verhalten wurde wie in Beispiel 2 untersucht, mit dem Unterschied, dass statt 20 mL demineralisiertem Wasser 20 mL Leitungswasser zugesetzt wurden.

Die Zelle entlud sich innerhalb von 35 h ab Zugabe des Leitungswassers vollständig (bis < 2 V Zellspannung). Die Zellspannung lag nach 43 h bei 0,98 V. Die Temperatur der Zelle stieg während der Entladung um nicht mehr als 3°C an (was innerhalb der natürlichen Temperaturschwankungen im Testraum liegt). Während der Entladung gaste die Zelle deutlich und bildeten sich 537 mL Gas.

### Vergleichsbeispiel 4:

### Verhalten der Batteriezelle bei Zugabe von wässriger CaCl₂-Lösung

Das Verhalten wurde wie in Beispiel 2 untersucht, mit dem Unterschied, dass statt 20 mL demineralisiertem Wasser 20 mL 1,0 mol/L wässrige CaCl₂-Lösung zugesetzt wurden.

Die Zelle entlud sich innerhalb von 30 h ab Zugabe der CaCl₂-Lösung vollständig (bis < 2 V Zellspannung). Die Zell-Spannung lag nach 45 h bei 0,65 V. Die Temperatur der Zelle stieg während der Entladung um nicht mehr als 3°C an (was innerhalb der natürlichen Temperaturschwankungen im Testraum liegt). Während der Entladung gaste die Zelle deutlich und es wurden 189 mL Gas gemessen, bis zusätzlich Korrosion (Lochfraß) des Al-Zellgehäuses auftrat und das restliche Gas über diese Leckstelle entweichen konnte.

### Beispiel 5:

### Verhalten der Batteriezelle bei Zugabe eines Ferrocen-Elektrolyt-Gemisches

Das Verhalten wurde wie in Beispiel 2 untersucht, mit dem Unterschied, dass statt 20 mL demineralisiertem Wasser 20 mL eines wasserfreien Ferrocen-Elektrolyt-Gemisches zugesetzt wurden. Das Gemisch wurde durch Lösen von 0,1 mol/L Ferrocen [Bis(η5-cyclopentadienyl)eisen, Fe(C₅H₅)₂] in 1 mol/L LiPF₆ in einem Lösungsmittelgemisch von 50 Gewichts-% Ethylencarbonat (1,3-Dioxolan-2-on, C₃H₄O₃) und 50 Gewichts-% Dimethylcarbonat (Kohlensäuredimethylester, C₃H₆O₃) unter Luft- und Feuchtigkeitsausschluss hergestellt.

Die Zelle entlud sich innerhalb von 61 h ab Zugabe der Ferrocen-hältigen Elektrolytlösung vollständig (bis < 2 V Zellspannung). Die Zellspannung lag nach 100 h bei 0,18 V. Die Temperatur der Zelle stieg während der Entladung um nicht mehr als 3°C an (was innerhalb der natürlichen Temperaturschwankungen im Testraum liegt). Während der Entladung konnte keine Gasbildung festgestellt werden. Es trat keine Korrosion des Zell-Gehäuses auf.

### Beispiel 6:

### Verhalten der Batteriezelle bei Zugabe einer nicht-wässrigen Ferrocen-Lösung

Das Verhalten wurde wie in Beispiel 2 untersucht, mit dem Unterschied, dass statt 20 mL demineralisiertem Wasser insgesamt 20 mL einer gesättigten Lösung von Ferrocen [Bis(η5-cyclopentadienyl)eisen, Fe(C₅H₅)₂] in einem Lösungsmittelgemisch von 50 Gewichts-% Ethylencarbonat (1,3-Dioxolan-2-on, C₃H₄O₃) und 50 Gewichts-% Dimethylcarbonat (Kohlensäuredimethylester, C₃H₆O₃) zugegeben wurden.

Die Zelle entlud sich innerhalb von 42 h ab Zugabe der Ferrocen-Lösung vollständig (bis < 2 V Zellspannung). Die Zellspannung lag nach 100 h bei 0,06 V. Die Temperatur der Zelle stieg während der Entladung um nicht mehr als 3°C an (was innerhalb der natürlichen Temperaturschwankungen im Testraum liegt). Während der Entladung konnte keine Gasbildung festgestellt werden. Es trat keine Korrosion des Zell-Gehäuses auf.

### Beispiel 7:

### Verhalten der Batteriezelle bei Zugabe einer nicht-wässrigen TEMPO-Lösung

Das Verhalten wurde wie in Beispiel 2 untersucht, mit dem Unterschied, dass statt 20 mL demineralisiertem Wasser insgesamt 20 mL einer 1 mol/L Lösung von TEMPO (2,2,6,6-Tetramethylpiperidinyloxyl) in einem Lösungsmittelgemisch von 50 Gewichts-% Ethylencarbonat (1,3-Dioxolan-2-on, C₃H₄O₃) und 50 Gewichts-% Dimethylcarbonat (Kohlensäuredimethylester, C₃H₆O₃] zugegeben wurden.

Die Zelle entlud sich innerhalb von 39 h ab Zugabe der TEMPO-Lösung vollständig (bis < 2 V Zellspannung). Die Zellspannung lag nach 48 h bei 0,02 V. Die Temperatur der Zelle stieg während der Entladung um nicht mehr als 3°C an (was innerhalb der natürlichen Temperaturschwankungen im Testraum liegt). Während der Entladung konnte keine Gasbildung festgestellt werden. Es trat keine Korrosion des Zell-Gehäuses auf.

### Beispiel 8:

### Verhalten der Batteriezelle bei Zugabe einer nicht-wässrigen DTB-DMB-Lösung

Das Verhalten wurde wie in Beispiel 2 untersucht, mit dem Unterschied, dass statt 20 mL demineralisiertem Wasser insgesamt 20 mL einer 0,05 mol/L Lösung von DTB-DMB (2,5-Di-*tert*-butyl-1,4-dimethoxybenzol) in einem Lösungsmittelgemisch von 50 Gewichts-% Ethylencarbonat (1,3-Dioxolan-2-on, C₃H₄O₃) und 50 Gewichts-% Dimethylcarbonat (Kohlensäuredimethylester, C₃H₆O₃] zugegeben wurden.

Die Zelle entlud sich innerhalb von 400 h ab Zugabe der DTB-DMB-Lösung nur teilweise bis zu einer Spannung von 3.7 V. Während der Entladung konnte keine Gasbildung festgestellt werden. Es trat keine Korrosion des Zell-Gehäuses auf.

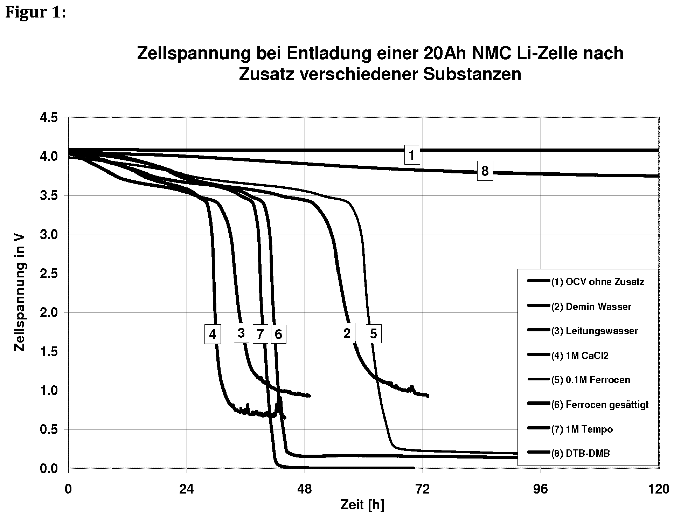

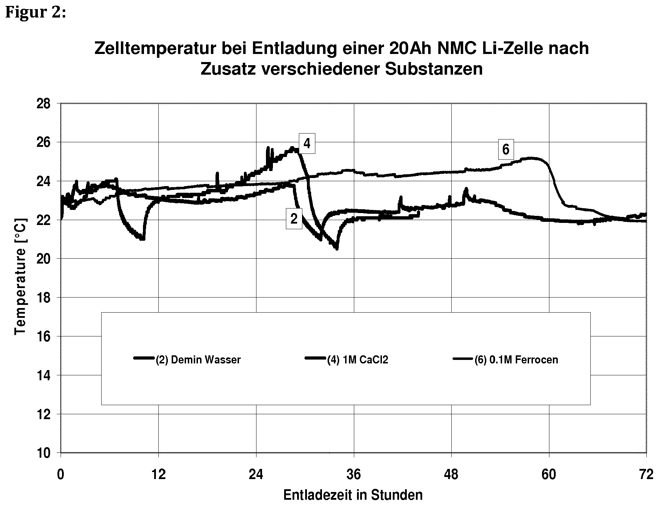

Der Verlauf der Zellspannung und der Zelltemperatur nach Zugabe der in den oben beschriebenen Beispielen aufgeführten Substanzen in den Elektrolyten der Zelle ist in den Figuren 1 und 2 gezeigt. Hierbei ist ersichtlich, dass durch Zugabe der Substanzen in den Elektrolyten der Zelle eine kontrollierte Entladung der Zelle erfolgte, ohne dass eine wesentliche Temperaturerhöhung stattfand.

## Patentansprüche

1. Energiespeicheranordnung, enthaltend
(1) einen Energiespeicher mit mindestens einer negativen Elektrode ("Anode"), mindestens einer positiven Elektrode ("Kathode"), Elektrolyt und elektrischen Polen, über die der Energiespeicher zumindest entladbar ist,
(2) einen Vorratsbehälter, enthaltend ein Redox-Shuttle-Additiv, und
(3) eine auslösbare Abgabevorrichtung, mittels der bei Auslösung das Redox-Shuttle-Additiv in den Elektrolyten des Energiespeichers derart abgegeben wird, dass die Kathode und die Anode des Energiespeichers mit dem im Elektrolyten vorhandenen Redox-Shuttle-Additiv in Kontakt stehen und der Energiespeicher teilweise oder vollständig entladen wird, indem das Redox-Shuttle-Additiv an der Kathode oxidiert und an der Anode reduziert wird,
wobei das Redox-Shuttle-Additiv zumindest partiell reversibel oxidierbar und partiell reversibel reduzierbar ist,
**dadurch gekennzeichnet, dass** das Redox-Shuttle-Additiv ein Redoxpotential aufweist, welches kleiner oder gleich dem Potential der teilweise oder vollständig entladenen Kathode und größer oder gleich dem Potential der teilweise oder vollständig entladenen Anode ist.

2. Energiespeicheranordnung nach Anspruch 1, wobei der Energiespeicher eine Batterie ist, bevorzugt eine wiederaufladbare Batterie, und weiter bevorzugt ein wiederaufladbarer Lithium-Ionen-Akkumulator.

3. Energiespeicheranordnung nach einem der vorhergehenden Ansprüche, wobei die Menge des Redox-Shuttle-Additivs derart gewählt wird, dass die Konzentration des Redox-Shuttle-Additivs in dem Elektrolyten von 0,005 mol/L bis 10 mol/L, bevorzugt von 0,05 bis 5 mol/L, besonders bevorzugt von 0,1 bis 2 mol/L beträgt.

4. Energiespeicheranordnung nach einem der vorhergehenden Ansprüche, wobei das Redox-Shuttle-Additiv eine organische Verbindung ist, ausgewählt aus Arylchinonen, Alkoxyarylkohlenwasserstoffen, Arylpseudohalogeniden, Estern, Nitroxylen, Arylaminen und Phenothiazinen.

5. Energiespeicheranordnung nach einem der Ansprüche 1 bis 3, wobei das Redox-Shuttle-Additiv ein reversibel oxidier/reduzierbares Metallion oder eine Verbindung mit reversibel oxidier/reduzierbaren Metallzentren ist, bevorzugt ausgewählt aus Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺und V²⁺/V³⁺/V⁴⁺/V⁵⁺.

6. Energiespeicheranordnung nach einem der Ansprüche 1 bis 5, wobei das Redox-Shuttle-Additiv in dem Vorratsbehälter in einem Lösungsmittel oder Elektrolyten vorliegt.

7. Energiespeicheranordnung nach Anspruch 6, wobei das Lösungsmittel ein nicht-wässriges oder wasserhaltiges Lösungsmittel ist.

8. Energiespeicheranordnung nach Anspruch 6, wobei der Elektrolyt ein wasserfreier Elektrolyt ist.

9. Energiespeicheranordnung nach einem der vorhergehenden Ansprüche, ferner enthaltend eine Kühlvorrichtung.

10. Energiespeicheranordnung nach einem der vorhergehenden Ansprüche, ferner enthaltend ein Überdruckventil.

11. Energiespeicheranordnung nach einem der vorhergehenden Ansprüche, wobei die auslösbare Abgabevorrichtung ausgewählt ist aus einer Sollbruchstelle, Mikrosprengladung, einem mechanisch, thermisch, chemisch und/oder elektrisch gesteuerten Freisetzungsmechanismus.

12. Verfahren zur kontrollierten Entladung einer Energiespeicheranordnung wie in einem der Ansprüche 1 bis 11 definiert, das Verfahren umfassend
i) Auslösen der Abgabevorrichtung und
ii) Abgabe des Redox-Shuttle-Additivs aus dem Vorratsbehälter in den Elektrolyten des Energiespeichers,
wobei die Elektroden des Energiespeichers mit dem im Elektrolyten vorhandenen Redox-Shuttle-Additiv in Kontakt kommen und der Energiespeicher teilweise oder vollständig entladen wird, indem das Redox-Shuttle-Additiv an der Kathode oxidiert und der Anode reduziert wird.

13. Verfahren nach Anspruch 12 wobei die Entladung des Energiespeichers über einen Zeitraum von 2 Minuten bis 72 Stunden erfolgt, bevorzugt von 30 min bis 24 Stunden, besonders bevorzugt von 1 bis 10 Stunden.

14. Verwendung eines Redox-Shuttle-Additivs zur kontrollierten Entladung einer wenigstens teilweise geladenen Energiespeicheranordnung, enthaltend
(1) einen Energiespeicher mit mindestens einer negativen Elektrode ("Anode"), mindestens einer positiven Elektrode ("Kathode"), Elektrolyt und elektrischen Polen, über die der Energiespeicher zumindest entladbar ist,
(2) einen Vorratsbehälter, enthaltend ein Redox-Shuttle-Additiv, und
(3) eine auslösbare Abgabevorrichtung, mittels der bei Auslösung das Redox-Shuttle-Additiv in den Elektrolyten des Energiespeichers derart abgegeben wird, dass die Kathode und die Anode des Energiespeichers mit dem im Elektrolyten vorhandenen Redox-Shuttle-Additiv in Kontakt stehen und der Energiespeicher teilweise oder vollständig entladen wird, indem das Redox-Shuttle-Additiv an der Kathode oxidiert und an der Anode reduziert wird,
wobei das Redox-Shuttle-Additiv zumindest partiell reversibel oxidierbar und partiell reversibel reduzierbar ist,
**dadurch gekennzeichnet, dass** das Redox-Shuttle-Additiv ein Redoxpotential aufweist, welches kleiner oder gleich dem Potential der teilweise oder vollständig entladenen Kathode und größer oder gleich dem Potential der teilweise oder vollständig entladenen Anode ist.

15. Verwendung eines Redox-Shuttle-Additivs nach Anspruch 14, wobei der wenigstens teilweise geladene Energiespeicher eine Batterie, bevorzugt eine wiederaufladbare Batterie, weiter bevorzugt ein Lithium-Ionen-Akkumulator ist.

16. Verwendung eines Redox-Shuttle-Additivs nach Anspruch 14 oder 15 wobei das Redox-Shuttle-Additiv eine organische Verbindung ist, ausgewählt aus Arylchinonen, Anthrachinonen, Alkoxyarylkohlenwasserstoffen, Arylpseudohalogeniden, Estern, Nitroxylen, Arylaminen und Phenothiazinen.

17. Verwendung eines Redox-Shuttle-Additivs nach Anspruch 14 oder 15, wobei das Redox-Shuttle-Additiv ein reversibel oxidier/reduzierbares Metallion oder eine Verbindung mit reversibel oxidier/reduzierbaren Metallzentren ist, bevorzugt ausgewählt aus Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺und V²⁺/V³⁺/V⁴⁺/V⁵⁺.

18. Verwendung eines Redox-Shuttle-Additivs nach einem der Ansprüche 14 bis 17, wobei der wenigstens teilweise geladene Energiespeicher Teil einer stationären, tragbaren oder mobilen Anwendung ist, bevorzugt Teil eines Hybridfahrzeugs, Plug-In-Hybridfahrzeugs oder Elektrofahrzeugs.

## Claims

1. An energy store arrangement, containing
(1) an energy store having at least one negative electrode ("anode"), at least one positive electrode ("cathode"), electrolyte, and electric poles, via which the energy store at the least can be discharged,
(2) a storage container, containing a redox shuttle additive, and
(3) a triggerable delivery device by means of which, when triggered, the redox shuttle additive is delivered into the electrolyte of the energy store in such a way that the cathode and the anode of the energy store are in contact with the redox shuttle additive provided in the electrolyte and the energy store is discharged partially or fully in that the redox shuttle additive is oxidised at the cathode and reduced at the anode,
wherein the redox shuttle additive can be at least partially reversibly oxidised and partially reversibly reduced, **characterized in that** the redox shuttle additive has a redox potential which is less than or equal to the potential of the partially or fully discharged cathode and is greater than or equal to the potential of the partially or fully discharged anode.

2. The energy store arrangement according to claim 1, wherein the energy store is a battery, preferably a rechargeable battery, and more preferably a rechargeable lithium-ion secondary cell.

3. The energy store arrangement according to any one of the preceding claims, wherein the amount of the redox shuttle additive is selected in such a way that the concentration of the redox shuttle additive in the electrolyte is from 0.005 mol/L to 10 mol/l, preferably from 0.05 to 5 mol/L, particularly preferably from 0.1 to 2 mol/L.

4. The energy store arrangement according to any one of the preceding claims, wherein the redox shuttle additive is an organic compound, selected from aryl quinones, alkoxyaryl hydrocarbons, aryl pseudohalides, esters, nitroxylene, aryl amines, and phenothiazines.

5. The energy store arrangement according to any one of claims 1 to 3, wherein the redox shuttle additive is a metal ion that can be reversibly oxidised/reduced or a compound having metal centres that can be reversibly oxidised/reduced, preferably selected from Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺ and V²⁺/V³⁺/V⁴⁺/V⁵⁺.

6. The energy store arrangement according to any one of claims 1 to 5, wherein the redox shuttle additive is present in the storage container in a solvent or electrolyte.

7. The energy store arrangement according to claim 6, wherein the solvent is a non-aqueous or water-containing solvent.

8. The energy store arrangement according to any one of the preceding claims, wherein the electrolyte is an anhydrous electrolyte.

9. The energy store arrangement according to any one of the preceding claims, also containing a cooling device.

10. The energy store arrangement according to any one of the preceding claims, also containing an overpressure valve.

11. The energy store arrangement according to any one of the preceding claims, wherein the triggerable delivery device is selected from a predetermined breaking point, micro explosive charge, a mechanically, thermally, chemically and/or electrically controlled release mechanism.

12. A method for the controlled discharge of an energy store arrangement as defined in any one of claims 1 to 11, said method comprising
i) triggering the delivery device, and
ii) delivering the redox shuttle additive from the storage container into the electrolyte of the energy store,
wherein the electrodes of the energy store come into contact with the redox shuttle additive present in the electrolyte and the energy store is partially or fully discharged in that the redox shuttle additive is oxidised at the cathode and is reduced at the anode.

13. The method according to claim 12, wherein the energy store is discharged over a period of from 2 minutes to 72 hours, preferably from 30 minutes to 24 hours, particularly preferably from 1 to 10 hours.

14. Use of a redox shuttle additive for the controlled discharge of an at least partially charged energy store arrangement, containing
(1) an energy store having at least one negative electrode ("anode"), at least one positive electrode ("cathode"), electrolyte, and electric poles, via which the energy store at the least can be discharged,
(2) a storage container, containing a redox shuttle additive, and
(3) a triggerable delivery device by means of which, when triggered, the redox shuttle additive is delivered into the electrolyte of the energy store in such a way that the cathode and the anode of the energy store are in contact with the redox shuttle additive provided in the electrolyte and the energy store is discharged partially or fully in that the redox shuttle additive is oxidised at the cathode and reduced at the anode,
wherein the redox shuttle additive can be at least partially reversibly oxidised and partially reversibly reduced, **characterized in that** the redox shuttle additive has a redox potential which is less than or equal to the potential of the partially or fully discharged cathode and is greater than or equal to the potential of the partially or fully discharged anode.

15. The use of a redox shuttle additive according to claim 14, wherein the at least partially charged energy store is a battery, preferably a rechargeable battery, more preferably a lithium-ion secondary cell.

16. The use of a redox shuttle additive according to claim 14 or 15, wherein the redox shuttle additive is an organic compound, selected from aryl quinones, anthraquinones, alkoxyaryl hydrocarbons, aryl pseudohalides, esters, nitroxylene, aryl amines, and phenothiazines.

17. The use of a redox shuttle additive according to claim 14 or 15, wherein the redox shuttle additive is a metal ion that can be reversibly oxidised/reduced or a compound having metal centres that can be reversibly oxidised/reduced, preferably selected from Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺ and V²⁺/V³⁺/V⁴⁺/V⁵⁺.

18. The use of a redox shuttle additive according to any one of claims 14 to 17, wherein the at least partially charged energy store is part of a stationary, portable, or mobile application, preferably part of a hybrid vehicle, plug-in hybrid vehicle, or electric vehicle.

## Revendications

1. Dispositif d'accumulateur d'énergie comprenant
(1) un accumulateur d'énergie comportant au moins une électrode négative ("anode"), au moins une électrode positive ("cathode"), un électrolyte et des pôles électriques par lesquels l'accumulateur d'énergie est au moins déchargeable,
(2) un réservoir contenant un additif de navette redox ; et
(3) un dispositif de distribution pouvant être déclenché au moyen duquel, lors du déclenchement, l'additif de la navette redox est introduit dans l'électrolyte du réservoir d'énergie de telle sorte que la cathode et l'anode du réservoir d'énergie sont en contact avec l'additif de la navette redox présent dans l'électrolyte et le réservoir est partiellement ou complètement déchargé par oxydation de l'additif à la cathode et sa réduction à l'anode,
dans laquelle l'additif de navette redox est au moins partiellement oxydable de manière réversible et partiellement réductible de manière réversible,
**caractérisé en ce que** l'additif de navette redox a un potentiel redox qui est inférieur ou égal au potentiel de la cathode partiellement ou complètement déchargée et supérieur ou égal au potentiel de l'anode partiellement ou complètement déchargée.

2. Dispositif d'accumulateur d'énergie selon la revendication 1, dans lequel l'accumulateur d'énergie est une batterie, de préférence une batterie rechargeable, et de manière davantage préférée une batterie lithium-ion rechargeable.

3. Dispositif d'accumulateur d'énergie selon l'une quelconque des revendications précédentes, dans lequel la quantité de l'additif de navette redox est choisie de telle sorte que la concentration de l'additif de navette redox dans l'électrolyte soit de 0,005 mol/L à 10 mol/L, de préférence de 0,05 à 5 mol/L, particulièrement de 0,1 à 2 mol/L.

4. Dispositif d'accumulateur d'énergie selon l'une quelconque des revendications précédentes, dans lequel l'additif de navette redox est un composé organique choisi parmi les arylquinones, les hydrocarbures alkoxyaryles, les arylpseudohalogénures, les esters, le nitroxylène, les arylamines et les phénothiazines.

5. Dispositif d'accumulateur d'énergie selon l'une quelconque des revendications 1 à 3, dans lequel l'additif de navette redox est un ion métallique oxydable/réductible de manière réversible ou un composé ayant des centres métalliques oxydables/réductibles de manière réversible, de préférence choisi parmi Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺ et V²⁺/V³⁺/V⁴⁺/V⁵⁺.

6. Dispositif d'accumulateur d'énergie selon l'une quelconque des revendications 1 à 5, dans lequel l'additif de navette redox est présent dans le réservoir dans un solvant ou un électrolyte.

7. Dispositif d'accumulateur d'énergie selon la revendication 6, dans lequel le solvant est un solvant non aqueux ou aqueux.

8. Dispositif d'accumulateur d'énergie selon la revendication 6, dans lequel l'électrolyte est un électrolyte anhydre.

9. Dispositif d'accumulateur d'énergie selon l'une des revendications précédentes, comprenant en outre un dispositif de refroidissement.

10. Dispositif d'accumulateur d'énergie selon l'une quelconque des revendications précédentes, comprenant en outre une soupape de surpression.

11. Dispositif d'accumulateur d'énergie selon l'une quelconque des revendications précédentes, dans lequel le dispositif de distribution pouvant être déclenché est choisi parmi un point de rupture prédéterminé, une charge microexplosive, un mécanisme de déclenchement à commande mécanique, thermique, chimique et/ou électrique.

12. Procédé pour la décharge contrôlée d'un dispositif d'accumulateur d'énergie tel que défini dans l'une quelconque des revendications 1 à 11, le procédé comprenant
i) le déclenchement du dispositif de distribution et
ii) la distribution de l'additif de navette redox du réservoir dans l'électrolyte de l'accumulateur d'énergie,
dans lequel les électrodes de l'accumulateur d'énergie entrent en contact avec l'additif de navette redox présent dans l'électrolyte et l'accumulateur d'énergie est partiellement ou totalement déchargé par ce que l'additif de navette redox est oxydé à la cathode et réduit à l'anode.

13. Procédé selon la revendication 12, dans lequel le déchargement de l'accumulateur d'énergie s'effectue sur une période de 2 minutes à 72 heures, de préférence de 30 minutes à 24 heures, en particulier de préférence de 1 à 10 heures.

14. Utilisation d'un additif de navette redox pour la décharge contrôlée d'un dispositif d'accumulateur d'énergie au moins partiellement chargé, comprenant
(1) un accumulateur d'énergie comportant au moins une électrode négative ("anode"), au moins une électrode positive ("cathode"), un électrolyte et des pôles électriques par lesquels l'accumulateur d'énergie est au moins déchargeable,
(2) un réservoir contenant un additif de navette redox ; et
(3) un dispositif de distribution pouvant être déclenché au moyen duquel, lors du déclenchement, l'additif de la navette redox est introduit dans l'électrolyte du réservoir d'énergie de telle sorte que la cathode et l'anode du réservoir d'énergie sont en contact avec l'additif de la navette redox présent dans l'électrolyte et le réservoir est partiellement ou complètement déchargé par oxydation de l'additif à la cathode et sa réduction à l'anode,
dans laquelle l'additif de navette redox est au moins partiellement oxydable de manière réversible et partiellement réductible de manière réversible,
**caractérisé en ce que** l'additif de navette redox a un potentiel redox qui est inférieur ou égal au potentiel de la cathode partiellement ou complètement déchargée et supérieur ou égal au potentiel de l'anode partiellement ou complètement déchargée.

15. Utilisation d'un additif de navette redox selon la revendication 14, dans laquelle l'accumulateur d'énergie au moins partiellement chargé est une batterie, de préférence une batterie rechargeable, et de manière davantage préférée une batterie lithium-ion rechargeable.

16. Utilisation d'un additif de navette redox selon la revendication 14 ou 15, dans laquelle l'additif de navette redox est un composé organique choisi parmi les arylquinones, les anthraquinones, les hydrocarbures alkoxyaryles, les arylpseudohalogénures, les esters, le nitroxylène, les arylamines et les phénothiazines.

17. Utilisation d'un additif de navette redox selon la revendication 14 ou 15, dans laquelle l'additif de navette redox est un ion métallique oxydable/réductible de manière réversible ou un composé ayant des centres métalliques oxydables/réductibles de manière réversible, de préférence choisi parmi Fe²⁺/Fe³⁺, Co²⁺/Co³⁺, Ni²⁺/Ni³⁺, Cr²⁺/Cr³⁺, Sn²⁺/Sn⁴⁺, Mn²⁺/Mn⁷⁺ et V²⁺/V³⁺/V⁴⁺/V⁵⁺.

18. Utilisation d'un additif de navette redox selon l'une quelconque des revendications 14 à 17, dans laquelle l'accumulateur d'énergie au moins partiellement chargé fait partie d'une application fixe, portable ou mobile, de préférence dans le cadre d'un véhicule hybride, d'un véhicule hybride rechargeable, ou d'un véhicule électrique.
